# EUROPÄISCHE PATENTANMELDUNG

(11) **EP 0 619 944 A1**
(43) Veröffentlichungstag der Anmeldung: **19.10.1994**
(21) Anmeldenummer: 94810088.8
(22) Anmeldetag: 16.02.1994
(51) Int. Cl.: A01K 27/00

(54) **Hundeleine mit Hundekotsackbehälter**

(30) Priorität: 17.02.1993 CH 2820/92
(71) Anmelder: Aerni, Werner, CH-2504 Biel-Bienne (CH)
(72) Erfinder: Aerni, Werner, CH-2504 Biel-Bienne (CH)

(57) **Zusammenfassung**

Die Erfindung bezieht sich auf eine Hundeleine (3) mit Behälter (1) für Hundekotsäcke. Das heisst dass am Ende der Hundeleine (3) ein Behälter (1) für Hundekotsäcke angebracht ist, kann zugleich auch als Handgriff seine Verwendung finden. Und bei einer Ausziehleine ist im inneren des Handgriffes eine Vorrichtung für Hundesäcke eingebaut, so habe ich immer einen oder mehrere Hundekotsäcke bei mir. Sollte mein Hund einmal auf dumme Gedanken kommen und das Geschäft auf einen verbotenen Platz machen, so brauche ich nicht noch lange nach einem Hundekotsack Ausschau halten.

## Beschreibung

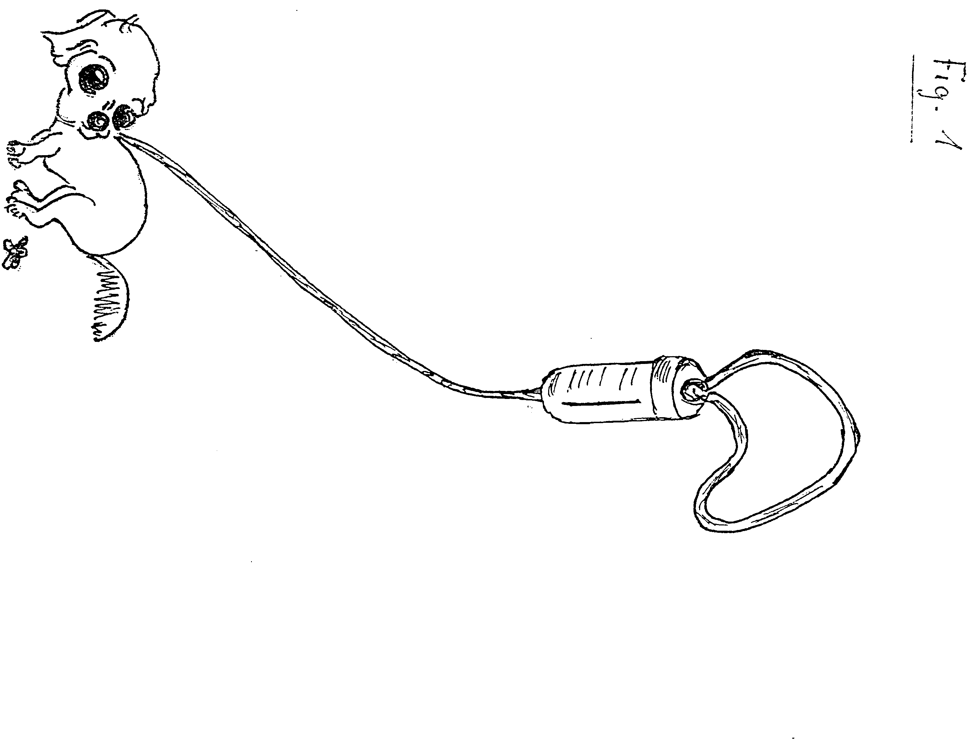

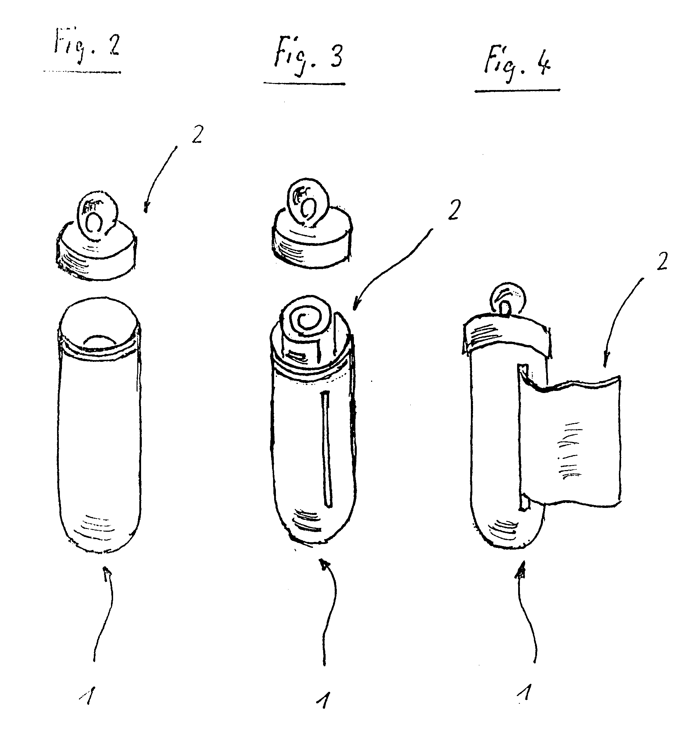

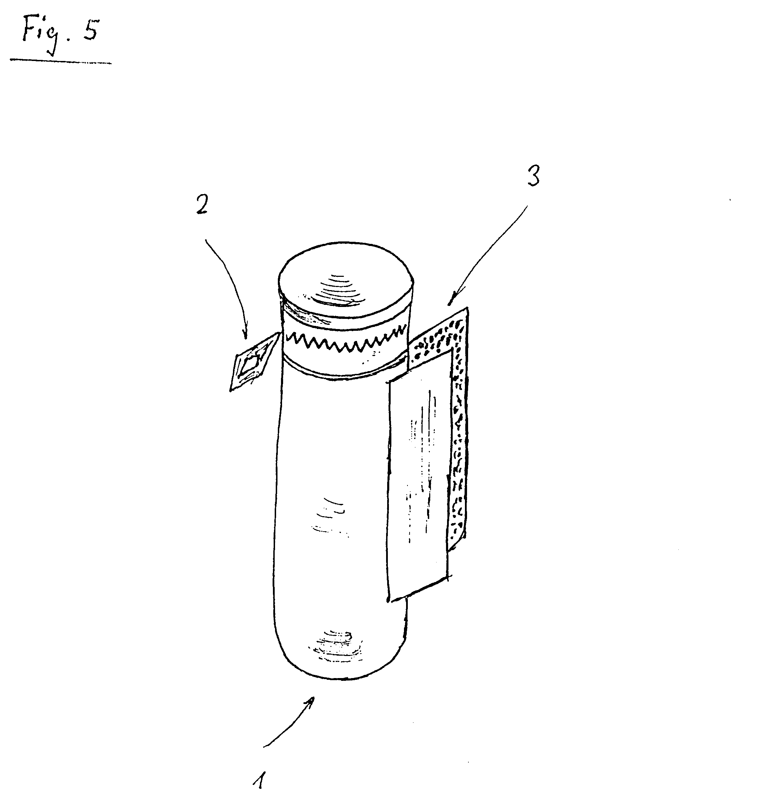

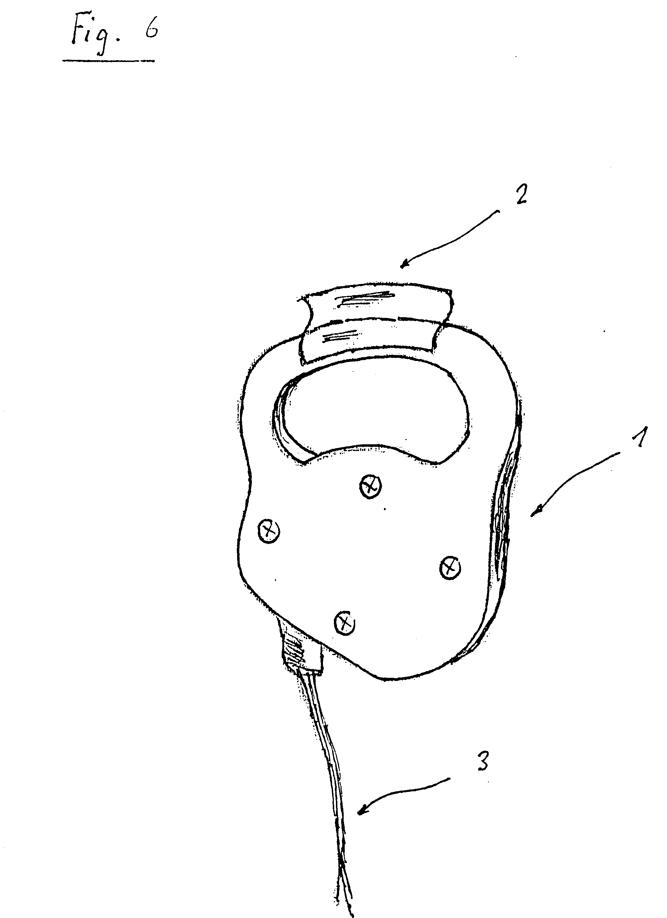

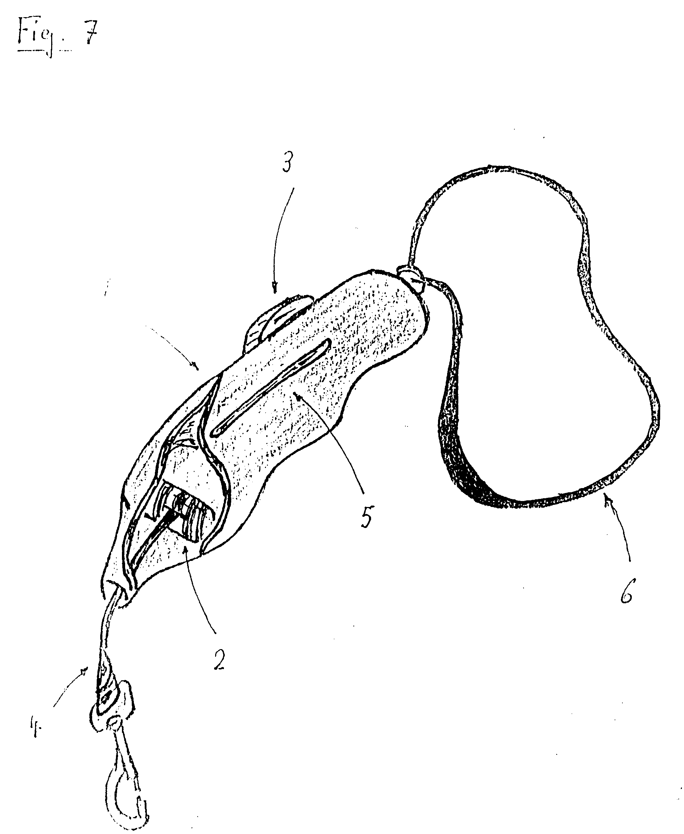

Nachstehend ist der Erfindungsgensand mit Bezugsnahme auf die Zeichnung beispielsweise näher erläutert.

ES ZEIGEN:

Fig: 1 die Draufsicht auf ein erstes Ausführungsbeispiel einer Hundeleine mit Hundekotsackbehälter.

Fig: 2 die Draufsicht auf einen Behälter mit einem Schraubverschluss. Nr. 1 ist ein Behälter. Nr. 2 ist ein Schraubdeckel.

Fig: 3 die Draufsicht auf einen Behälter mit Seitenschlitz. Nr. 1 ist ein Behälter. Nr. 2 zeigt aufgerollte Hundekotsäcke.

Fig: 4 die Draufsicht auf einen Behälter mit bereits herausgezogenem Hundekotsack. Nr. 1 ist ein Behälter. Nr. 2 ist ein Hundekotsack.

Fig: 5 die Draufsicht auf einen Behälter der an einer Hundeleine befestigt wird. Nr. 1 ist ein Behälter. Nr. 2 ist der Reissverschluss. Nr 3 eine der vielen Befestigungen.

Fig: 6 die Draufsicht auf eine Ausziehleine mit eingebautem Hundekotsackbehälter. Nr. 1 das Gehäuse einer Ausziehleine. Nr. 2 ist ein Deckel von einem eingebautem Hundekotsackbehälter. Nr. 3 ist eine Hundeleine.

Fig: 7 die Draufsicht auf einen Handgriff für Hundekotsäcke mit automatischer Auf und Abrollleine. Nr. 1 ist das Gehäuse für Hundekotsäcke und zugleich Handgriff. Nr. 2 ist eine Rolle mit einer Auf und Abrollfeder. Nr. 3 ist ein Knopf zum verstellen der Leine. Nr. 4 ist eine Leine mit Verschluss. Nr. 5 ist die Oeffnung um die Hundekotsäcke rauszuziehen. Nr. 6 ist eine Handleine.

## Patentansprüche

1. Hundeleine mit Hundekotsackbehälter,dadurch gekennzeichnet,dass an der Hundeleine oder im Innern des Handgriffes ein Behälter für Hundekotsäcke angebracht ist.

2. Hundeleine mit Hundekotsackbehälter nach Anspruch 1, dadurch gekennzeichnet,dass der Verschluss vom Hundekotsackbehälter wie ein Schraubverschluss,Klemmverschluss oder Drehverschluss hersgestellt ist.

3. Hundeleine mit Hundekotsackbehälter nach Anspruch 1 oder 2,dadurch gekennzeichnet,dass am Behälter in der Länge des Gehäuses eine Oeffnung in Form eines Schlitzes angebracht ist,somit besteht die Möglichkeit die Säcke von der Seite herauszuziehen ohne den Behälter zu öffnen.

4. Hundeleine mit Hundekotsackbehälter nach einem der vorhergehenden Ansprüche, dadurch gekennzeichnet,dass der Behälter aus verschiedenen herkömmlichen Materialien wie Metall oder Plastik hergestellt ist.

5. Hundeleine mit Hundekotsackbehälter nach einem der vorhergehenden Ansprüche,dadurch gekennzeichnet,dass der Behälter der auch als Handgriff dient,mit einer stufenlos automatischen Auf-und Abrollvorrichtung der Leine ausgerüstet ist,und die Leine somit mittels Knopfdruck je nach Wunsch verstellbar ist.
